# EUROPEAN PATENT APPLICATION

(11) **EP 1 788 573 A1**
(43) Date of publication of application: **23.05.2007**
(21) Application number: 06124393.7
(22) Date of filing: 20.11.2006
(51) Int. Cl.: G11B 27/10, G06F 3/06, G11B 19/02, G11B 11/105, G11B 20/10

(54) **Apparatus and method for recording and/or reading data onto or from a medium**

(30) Priority: 21.11.2005 KR 20050111433
(71) Applicant: Samsung Electronics Co., Ltd., Suwon-si, Gyeonggi-Do (KR)
(72) Inventor: Park, Pan-gie, Yongin-si Gyeonggi-do (KR); Lee, Cheon-seong 301-101 Cheongmyeong, Suwon-si Gyeonggi-do (KR); Lim, Pung-hwan, Suji-gu Yongin-si Gyeonggi-do (KR)
(74) Representative: Clark, Charles Robert

(57) **Abstract**

An apparatus and method to record and/or read data on a recording medium including a master data processor to process a first type of data, a slave data processor to process a second type of data, and a multiplexer selecting one of interface signals outputted from the master data processor and the slave data processor to communicate with the disk driver. Additionally, the master data processor controls an operation of the slave data processor and the multiplexer to select one of the interface signals outputted from the master data processor and the slave data processor.

## Description

The present invention relates to an apparatus and a method to record and/or read data on/from a recording medium. In particular, but not exclusively, the present invention can effectively support the recording and reading of a plurality of different recording media types.

Since new standard disks have been continuously developed to increase product competitiveness and reduce manufacturing costs, many media recording/reading apparatuses are designed to include a reduced number of components while supporting the new standard disks and conventional disks simultaneously. For example, the new standard disk may be a blu-ray disk, while the conventional disc may be a compact disk (CD) or a digital versatile disk (DVD).

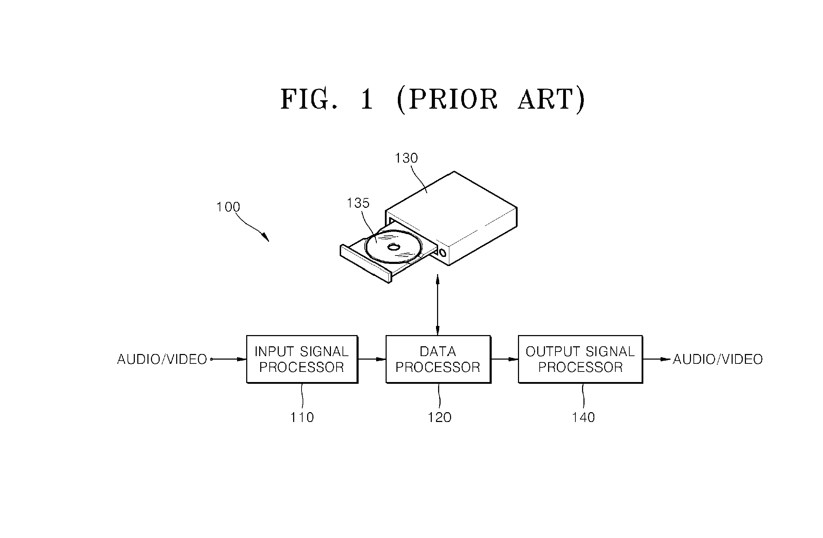

Figure 1 is a block diagram illustrating a configuration of a conventional apparatus 100 to record and/or read data. The conventional recording/reading apparatus 100 includes an input signal processor 110, a data processor 120, a disk drive 130 for driving a recording medium, and an output signal processor 140. After a recording medium 135 is inserted into the disk drive 130, an audio and video signal received by the input signal processor 110 can be recorded on the recording medium 135 by the data processor 120. Additionally, the data read from the recording medium 135 by the disk drive 130 can be outputted to the output signal processor 140 through the data processor 120. The data processor 120 can record data on the recording media 135 inserted in the disk drive 130, or play back the data read from the recording media 135. To perform these operations, the data processor 120 performs an interface operation with the disk drive 130. The interface operation can be performed by intelligent device electronics (IDE).

To support a new standard recording media, the data processor 120 is required to support a new standard data format, and under normal circumstances, the conventional components of the recording/reading apparatus have to be replaced with newly-developed components. Additionally, since the conventional data format must also be supported, the new data processor must support both the conventional data format and the new standard data format. However, replacing the conventional data processor with the new data processor to provide the required product quality consumes a long period of time. Consequently, the product developing cost can increase, especially when the data processor must perform many complicated functions to support special data formats, such as DVD data format.

It is an aim of the present invention to provide an apparatus and a method to record and/or read data on/from a recording medium and to effectively support the recording and reading of a plurality of different recording media types.

According to an aspect of the present invention, there is provided an apparatus to record and/or read data on/from a recording medium by using a disk drive, the apparatus including: a master data processor to process a first type of data; a slave data processor to process a second type of data; and a multiplexer selecting one of interface signals outputted from the master data processor and the slave data processor to communicate with the disk drive, wherein the master data processor controls an operation of the slave data processor and the multiplexer to select one of the interface signals outputted from the master data processor and the slave data processor.

The master data processor may determine, according to a predetermined standard, whether a data processing operation mode is set to a master mode in which the master data processor processes the data or a slave mode in which the slave data processor processes the data.

The predetermined standard may be a recording medium type, a data type recorded on the recording medium, and/or a user interface operation type.
The master data processor may control the multiplexer to select a signal of the slave data processor as the interface signal when the determined operation mode is the slave mode, and send an operation command to process the second type of data to the slave data processor.

The slave data processor may process the second type of data in the slave mode by receiving an operation command to process the second type of data from the master data processor, and send a message notifying a completion of the data processing operation to the master data processor when the processing of the second type of data is completed.

The apparatus may further include an output signal processor, controlled by the master data processor, to output the data processed from the slave data processor and the master data processor.

The apparatus may further include an input signal processor sending an audio signal or a video signal to the master data processor or the slave data processor by receiving the audio signal or the video signal to be recorded on the recording medium.

The master data processor may determine whether the interface operation reading the data from the recording medium inserted in the disk drive or recording the data on the recording medium in the disk drive must be performed when the determined operation mode is the master mode.

The master data processor may set a master flag representing a recording medium access status of the master data processor and control the multiplexer to select a signal of the master data processor as the interface signal after the master data processor confirms that a slave flag representing a recording medium access status is clear when the interface operation must be performed.

The master data processor may clear the master flag and control the multiplexer to select a signal of the slave data processor as the interface signal when the interface operation is completed.

The slave data processor may determine whether the interface operation must be performed when the operation mode of the data processing is determined as the slave mode; set the slave flag representing a recording medium access status of the slave data processor after a master operation is completed and the master flag representing a recording medium access status is confirmed as clear when the interface operation needs to be performed; and send a message notifying a completion of the slave data processing operation to the master data processor after clearing the slave flag when the interface operation is completed.

The master data processor may, in case the master data processor must perform the interface operation even when an operation of the slave data processor is not completed, set the master flag representing a recoding medium access status of the master data processor, control the multiplexer to select a signal of the slave data processor as the interface signal, and perform the interface operation.

According to another aspect of the present invention, there is provided a method to record and/or read data on/from a recording medium by using a disk drive, the method including: determining whether a data processing operation mode is set to a master mode in which a master data processor processes the data or a slave mode in which a slave data processor processes the data according to a predetermined standard; and processing the data in the master mode or the slave mode according to the determined operation mode.

According to another aspect of the present invention, there is provided an apparatus to record and/or read data on/from a recording medium by using a disk drive, the apparatus comprising: a master data processor to process a first type of data to be recorded and/or read on/from the recording medium; and a slave data processor to process a second type of data to be recorded and/or read on/from the recording medium, wherein a data processing operation mode is set, according to a predetermined standard, to a master mode, in which a master interface signal outputted from the master data processor is selected to communicate with the disk drive and the master data processor processes the first type of data, or a slave mode, in which a slave interface signal outputted from the slave data processor is selected to communicate with the disk drive and the slave data processor processes the second type of data.

Preferably, a multiplexer is arranged to select between the master interface signal and the slave interface.

Preferably, the master data processor can determine whether the data processing operation mode is set, according to the predetermined standard, to the master mode or the slave mode in which the slave data processor processes the second type of data. The predetermined standard can be a recording medium type, a data type recorded on the recording medium, and/or a user interface operation type.

Preferably, the master data processor can determine whether a master interface operation of reading or recording the first type of data from or on the recording medium inserted in the disk drive must be performed when the determined operation mode is the master mode; the master data processor sets a master flag when the master data processor determines that the master interface operation must be performed; and the master data processor clears the master flag when the master interface operation has been completed.

Preferably, the slave data processor can determine whether a slave interface operation of reading or recording the second type of data from or on the recording medium must be performed when the determined operation mode is the slave mode; and the slave interface signal is controlled to be selected when the determined operation mode is the slave mode, the slave interface operation must be performed, and the master flag has been cleared.

Preferably the slave data processor can determine whether a slave interface operation of reading or recording the second type of data from or on the recording medium must be performed when the determined operation mode is the slave mode; the slave data processor sets a slave flag when the slave data processor determines that the slave interface operation must be performed; the slave data processor clears the slave flag when the slave interface operation has been completed; and the master interface signal is controlled to be selected when the determined operation mode is the master mode, the master interface operation must be performed, and the slave flag has been cleared.

Preferably, the master interface signal can be controlled to be selected when a slave interface operation of reading or recording the second type of data on the recording medium inserted in the disk drive has not been completed and the master data processor determines that a master interface operation of reading or recording the first type of data from or on the recording medium inserted in the disk drive must be performed.

According to another aspect of the present invention, there is provided An apparatus to record and/or read data on/from a recording medium by using a disk drive, the apparatus comprising: a master data processor to process a first type of data to be recorded and/or read on/from the recording medium; and a multiplexer enabled to select between a master interface signal outputted from the master data processor and another interface signal outputted from another data processor, which processes another type of data different from the first type of data, to communicate with the disk drive, wherein the multiplexer selects between the master interface signal and the other interface signal when the apparatus comprises the other data processor.

Preferably, when the apparatus comprises the other data processor, the master data processor determines whether a data processing operation mode is set, according to a predetermined standard, to a master mode in which the master data processor processes the first type of data or another mode in which the other data processor processes the other type of data.

Preferably, the master data processor determines whether a master interface operation of reading or recording the first type of data from or on the recording medium inserted in the disk drive must be performed when the determined operation mode is the master mode; the master data processor sets a master flag when the master data processor determines that the master interface operation must be performed; and the master data processor clears the master flag when the master interface operation has been completed.

Preferably, when the apparatus comprises the other data processor: the other data processor determines whether another interface operation of reading or recording the other type of data from or on the recording medium must be performed when the determined operation mode is the other mode; and the master data processor controls the multiplexer to select the other interface signal when the determined operation mode is the other mode, the other interface operation must be performed, and the master flag has been cleared.

Preferably the other data processor determines whether another interface operation of reading or recording the other type of data from or on the recording medium must be performed when the determined operation mode is the other mode; the other data processor sets another flag when the slave data processor determines that the other interface operation must be performed; the other data processor clears the other flag when the other interface operation has been completed; and the master data processor controls the multiplexer to select the master interface signal when the determined operation mode is the master mode, the master interface operation must be performed, and the other flag has been cleared.

Embodiments of the present invention are now described, by way of example and with reference to the accompanying drawings of which:
Figure 1 is a block diagram illustrating a configuration of a conventional apparatus to record and/or read data;
Figure 2 is a block diagram illustrating a configuration of an apparatus to record/read data according to an embodiment of the present invention;
Figure 3 is a flowchart illustrating a method to record and/or read data according to an embodiment of the present invention;
Figure 4 is a flowchart illustrating operations of a master data processor according to an embodiment of the present invention;
Figure 5 is a flowchart illustrating operations of a slave data processor according to an embodiment of the present invention;
Figure 6 is a block diagram illustrating a configuration of an apparatus to record and/or read data according to another embodiment of the present invention;
Figure 7 is a flowchart illustrating operations of a master data processor according to another embodiment of the present invention;
Figure 8 is a flowchart illustrating operations of a slave data processor according to another embodiment of the present invention; and
Figure 9 is a flowchart illustrating a master interrupt operation according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

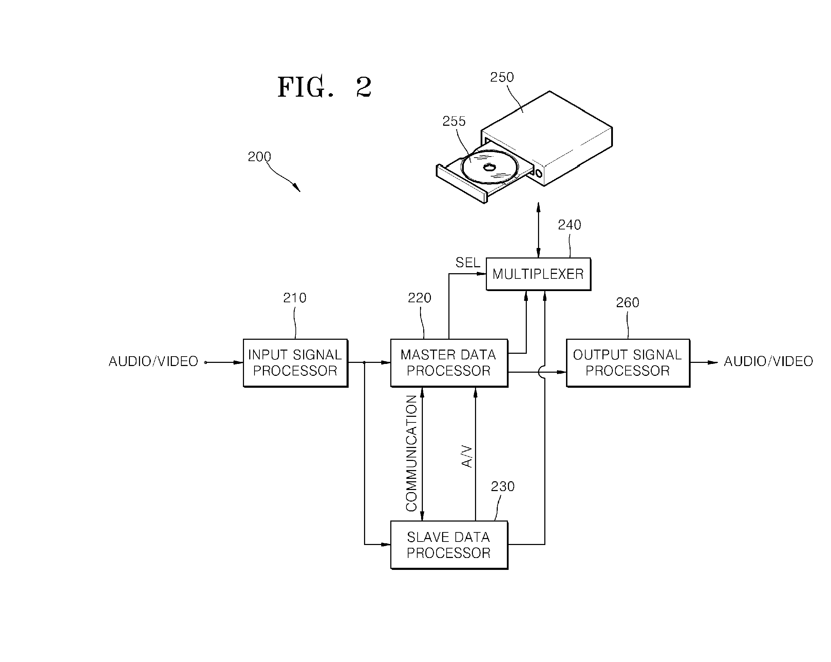

Figure 2 is a block diagram illustrating a configuration of an apparatus 200 to record and/or read data according to an embodiment of the present invention. The apparatus 200 includes an input signal processor 210, a master data processor 220, a slave data processor 230, a multiplexer 240, a disk drive 250, and an output signal processor 260.

Audio and/or video signals are received through the input signal processor 210.
The input signal processor 210 may include a tuner (not shown) inputting a transport stream to the input signal processor 210 by tuning and demodulating a broadcast signal inputted into a specific channel that a user may select. The input signal processor 210 receives a digital broadcast and/or can process data of a specific format to be recorded on the recording medium 255 inserted in the disk drive 250. That is, the input signal processor 210 can receive the transport stream and process data therefrom and/or the processor can process data of a specific format which might be stored in the apparatus 200, received externally, or read from a recording medium read by the apparatus 200.

A data processor includes the master data processor 220 and the slave data processor 230. Here, data processing operations include interface operations, such as operations of interfacing with the disk drive 250 to record and/or read data on/from the recording medium 255 inserted into the disk drive 250, and/or non-interface operations, such as an operation of controlling an entire system and operations of decoding and outputting the read data. The interface operations between the disk drive 250 and the master data processor 220 and the slave data processor 230 can be performed by an IDE command method.

The master data processor 220 controls an entire system of the recording and reading apparatus 200 to be operated according to, for example, an input from a user interface unit (not shown) that may provide a graphic user interface (GUI) and may include, for example, a remote controller, input buttons, or the like. Furthermore, the master data processor 220 can determine whether an operation mode of the data processing sets a master mode (performing the data processing in the master data processor 220) or a slave mode (performing the data processing in the slave data processor 230).

Additionally, the master data processor 220 can process new standard data while the slave data processor 230 processes conventional data through communicating with the master data processor 220. The new standard data that the master data processor 220 processes can be, for example, data recorded on a blu-ray disk or an HD-DVD (where HD refers to the High Definition picture standard). The conventional data that the slave data processor 230 processes can be, for example, data recorded on a conventional CD and/or a conventional DVD. Accordingly, the master data processor 220 can decide the operation mode of the data processing according to the type of recording medium 255 inserted in the disk drive 250.

On the other hand, the master data processor 220 or the slave data processor 230 can process the data according to a processing data type. For example, when a CD is inserted in the disk drive 250, MP3 files, JPEG files, and/or DVD files recorded on the CD can be processed by the master data processor 220. That is, when a user inputs a control to perform an operation to play the MP3 files from a hard disk or a CD through the user interface unit (not shown), the master data processor 220 can determine to process the data itself. Accordingly, the master data processor 220 can determine an operation mode of the data processing according to the user interface operation or the data format recorded on the recording medium.

The master data processor 220 and the slave data processor 230 can communicate to each other by exchanging mutual operation mode status information (e.g., an information message notifying a completion of the slave data processing) or a command (e.g., the master data processor 220 commands the slave data processor 230 to process data). Additionally, the master data processor 220 controls the data, which may be read and processed by the master data processor 220 and/or the slave data processor 230, to be output to the output signal processor 260.

The multiplexer 240, after receiving a select signal SEL from the master data processor 220, sets the disk drive 250 to operate in the master mode by selecting a signal of the master data processor 220 as an interface signal to interact with the disk drive 250, or sets the disk drive 250 to operate in the slave mode by selecting a signal of the slave data processor 230 as the interface signal. However, it is understood that other methods may be used to set the operation mode, such as providing the master mode (or a slave mode) as a default and receiving a select signal SEL from the slave data processor 230 to set the slave mode.

The disk drive 250 can be a drive compatible with, for example, a CD, a DVD, a blu-ray disk, and/or an HD-DVD, or can be an external hard disk connected and operated through a universal serial bus (USB). Additionally, the disk drive 250 can be a drive where any type of recording or storage media (not necessarily a disk) can be inserted (for example, a flash memory or an SD card). Furthermore, the disk drive 250 may be capable of simultaneously receiving a plurality of recording media.

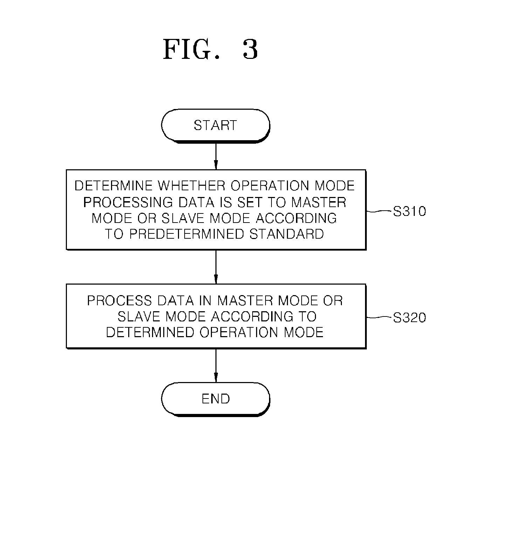

Figure 3 is a flowchart illustrating a method of recording and/or reading data according to an embodiment of the present invention. First, whether a data processing operation mode is in the master mode, in which the master data processor 220 processes data, or the slave master mode, in which the slave data processor 230 processes data, is determined according to a predetermined standard in operation S310. In operation S320, the data is processed in the master mode or the slave mode according to the above determination. The predetermined standard may be a recording medium type, a data type recorded on the recording medium, or a user interface operation type.

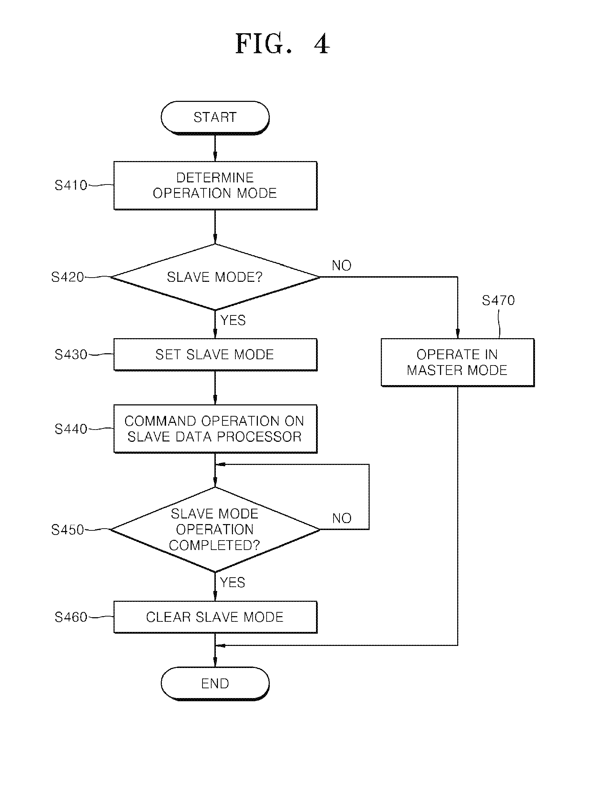

Figure 4 is a flowchart illustrating operations of a master data processor 220 according to an embodiment of the present invention. An operation of the master data processor will now be described in more detail with reference to Figures 2 and 4. First, the master data processor 220 determines an operation mode in which data is processed by the master data processor or the slave data processor according to a predetermined standard in operation in operation S410. When the slave mode, in which the slave data processor 230 processes the data, is determined as the operation mode in operation S420, the slave mode is set by controlling the multiplexer 240 to select a signal from the slave data processor 230 as an interface signal to interact with the disk drive 250 in operation S430.

Next, the master data processor 220 sends a data processing operation command to the slave data processor 230 in operation S440. When the slave data processor 230 completes the data processing operation in operation S450, the master data processor 220 sets the multiplexer 240 to the master mode, as soon as the slave mode is cleared, by controlling the multiplexer 240 to select a signal of the master data processor 220 as an interface signal for the disk drive in operation S460.

When the master mode, in which the master data processor 220 processes the data, is determined as the operation mode to process the data in operation S420, the master data processor 220 performs the data processing operation in operation S470. That is, the multiplexer 240 may be controlled to allow the data processing operation mode to be the master mode by default by being controlled to select a signal from the master data processor 220 as an interface signal to interact with the disk drive 250.

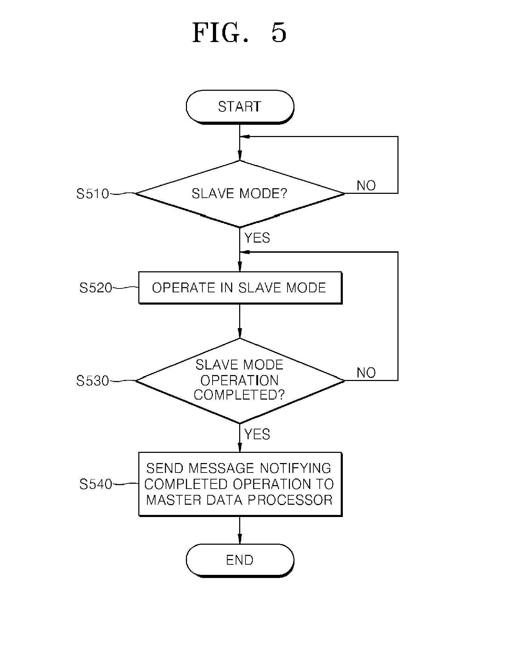

Figure 5 is a flowchart illustrating operations of a slave data processor 230 according to an embodiment of the present invention. The multiplexer 240 is controlled to select a signal from the slave data processor 230 in order set the slave mode, and the slave data processor 230 receives a data processing command in operation S510. Then, the slave data processor 230 performs the data processing operation in operation S520. When the slave data processor 230 completes the data processing in operation S530, a message notifying a completion of the slave operation is sent to the master data processor 220 in operation S540.

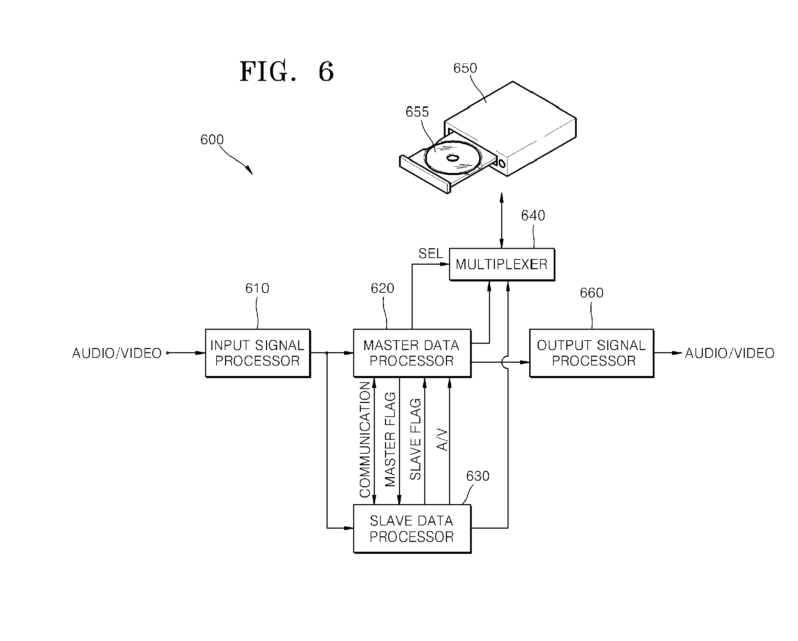

Figure 6 is a block diagram illustrating a configuration of an apparatus 600 to record and/or read data according to another embodiment of the present invention. The apparatus 600 in Figure 6 includes the same components as the recording/reading apparatus 200 in Figure 2. Accordingly, in the recording/reading apparatus 600, a master data processor 620 communicates with a slave data processor 630 and outputs the data read by the slave data processor 630. However, the master data processor 620 further determines whether the data processing operations of the master data processor 620 or the slave data processor 630 are the interface operations (i.e., recording data on the recording medium 655 inserted in the disk drive 650 or reading data from the recording medium 655).

When the slave data processor 630 is required to perform a data processing operation while the master data processor 620 is already performing a data processing operation, the master data processor 620 may continue to interface with the disk drive 650 as the slave data processor 630 performs an operation that does not require an interface with the disk drive 650. Accordingly, only when the slave data processor 630 performs the data processing operation that requires an interface with the disk drive 650, the master data processor 620 controls the multiplexer 640 to select a signal from the slave data processor 630 as the interface signal, thus setting the slave mode.

Additionally, when the master data processor 620 is required to perform a data processing operation while the slave data processor 630 is already performing a data processing operation, the slave data processor 630 may continue to interface with the disk drive 650 as the master data processor 620 performs an operation that does not require an interface with the disk drive 650. Accordingly, only when the master data processor 620 performs the data processing operation that requires an interface with the disk drive 650, the master data processor 620 controls the multiplexer 640 to select a signal from the master data processor 620 as the interface signal, thus setting the master mode. Then, the master data processor 620 can interface with the disk drive 650.

According to an aspect of the present invention, when the master data processor 620 performs an interface operation with the disk drive 650, the slave data processor 630 performs a data processing operation that does not require an interface operation, and vice versa. Accordingly, by determining whether a data processing operation requires interfacing with the disk drive 650, the efficiency of the data processing can be improved.

To perform the determination operation, the master data processor 620 and the slave data processor 630 set a flag in terms of the hardware of the system. The slave flag represents a status that the slave data processor 630 is accessing the recording medium 655 (i.e., interfacing with the disk drive 650), and the master flag represents a status that the master data processor 630 is accessing the recording medium 655.

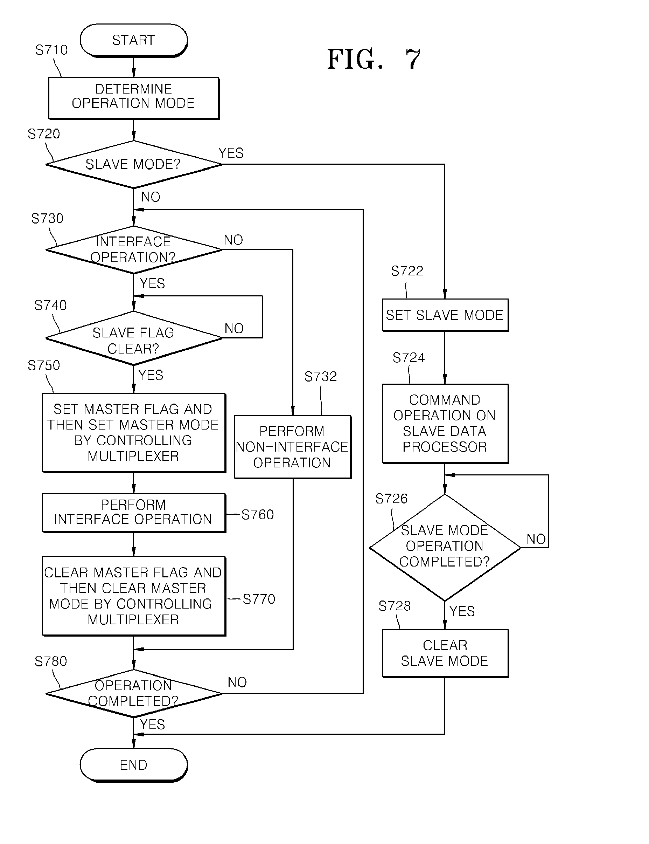

Referring to figures 7 through 9, operations of the master data processor 620 and the slave data processor 630 will now be described.

Figure 7 is a flowchart illustrating operations of a master data processor according to another embodiment of the present invention. Referring to figures 6 and 7, an operation of the master data processor 620 will now be described according to another embodiment of the present invention. First, the master data processor 620 determines, according to a predetermined standard, an operation mode, in which the master data processor 620 processes the data or the slave data processor 630 processes the data according to a predetermined standard, in operation S710. When the slave mode is determined as the operation mode (the slave data processor 630 processes the data) in operation S720, the multiplexer 640 is set to the slave mode so that a signal from the slave data processor 630 controls the disk drive 650 in operation S722.

Next, the master data processor 620 sends a data processing operation command to the slave data processor 630 in operation S724. When the slave data processor 630 completes the data processing operation in operation S726, the slave mode is cleared from controlling the disk drive 650 by a signal of the master data processor 620 in operation S728.

On the other hand, when the operation mode is determined to be the master mode (the master data processor 620 processes data) in operation S720, it is determined whether the master data processor 620 performs an interface operation with the disk drive 650 in operation S730. When the interface operation is not necessary, a corresponding non-interface operation is performed in operation S732. When the interface operation is necessary, the slave flag is confirmed as clear, in operation S740, before the master data processor 620 interfaces with the disk drive 650.

In operation S750, the master flag is set and the multiplexer is set to the master mode when the slave flag is clear. Then, the master data processor 620 performs an interface with the disk drive 650 in operation S760. Once the interface operation is complete, the master flag is cleared and the master mode is cleared by controlling the multiplexer 640 in operation S770. It is then determined that all necessary operations are completed, and, if not, operation 730 is performed again.

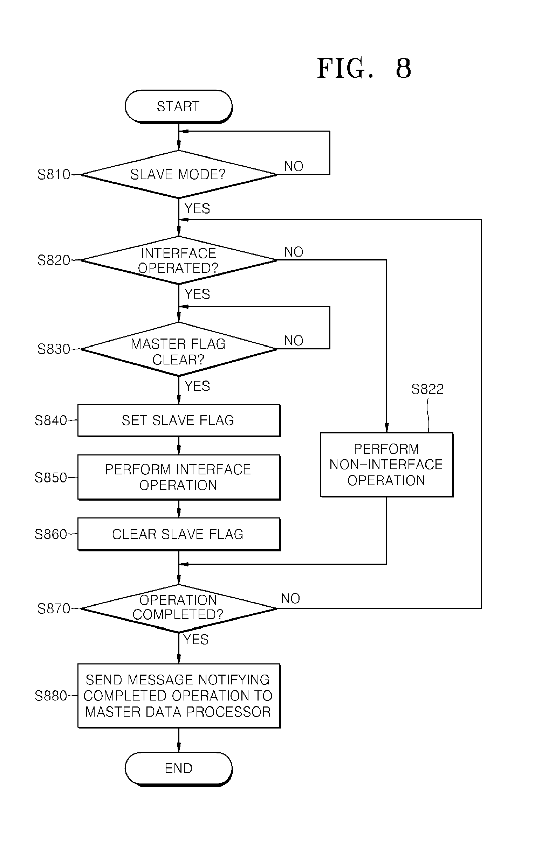

Figure 8 is a flowchart illustrating operations of a slave data processor according to another embodiment of the present invention. When the master data processor 620 determines the data processing operation mode as the slave mode in operation S810, the master data processor 620 determines whether the slave data processor 630 requires an interfacing with the disk drive 650 in operation S820. When the slave data processor 630 does not require an interface operation with the disk drive 650, a non-interface operation is performed in operation S822.

In a case that the slave data processor 630 requires an interface operation with the disk drive 650, it is determined whether the master flag is clear in operation S830. When it is confirmed that the master flag is clear (operation S830), the slave data processor 630 sets the slave flag in operation S840 and performs an interface operation with the disk drive 650 in operation S850. Once the interface operation is completed, the slave flag is cleared in operation S860. Then, it is determined if all necessary operations are completed in operation S870, and if not, the operation S820 is performed again. When all necessary operations are completed, a message notifying a completion of the operation is sent to the master data processor 620 in operation S880.

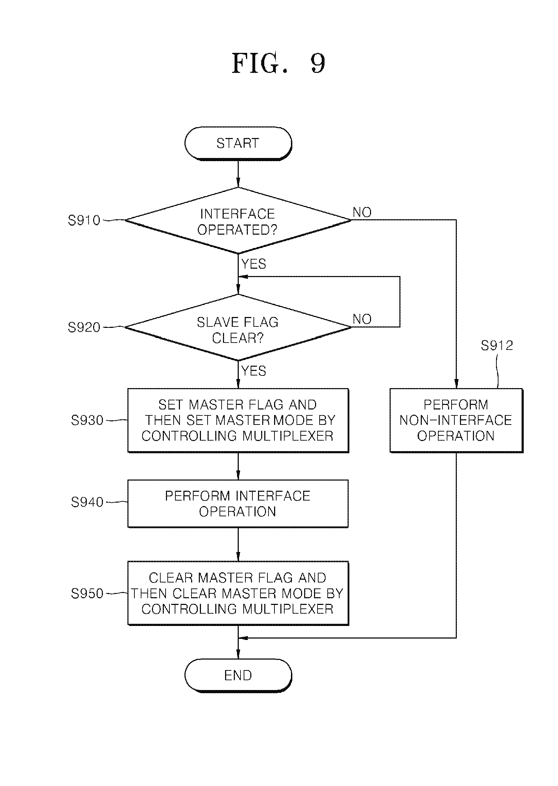

Figure 9 is a flowchart illustrating a master interrupt operation according to an embodiment of the present invention. The master data processor 620 can examine the disk drive interface periodically using an interrupt operation. For example, when a recording medium 655 inserted in the disk drive and processed by the slave data processor 630 is changed, an operation of the slave data processor 630 should be stopped and the master data processor 620 should perform the interface operation with the disk drive 650.

When the interrupt operation occurs, it is determined whether a disk drive interface operation is required in operation S910. When the disk drive interface operation is not required, a required data processing is performed in operation S912. When the disk drive interface operation is required, the master data processor 620 confirms that the slave flag is clear in operation S920. That is, the master flag is set after confirming that the slave data processor 630 does not access the recording medium 655 of the disk drive 650, and the master data processor 620 is set to the master mode by controlling the multiplexer 640 in operation S930. An interface operation with the disk drive 650 is performed in operation S940. When the interface operation is completed, the master flag is cleared and the interrupt operation is completed by controlling the multiplexer 640 to clear the master mode in operation S950.

The recording and reading apparatus 600 of the present invention can also be embodied as computer-readable codes on a computer-readable recording medium. Also, codes and code segments to accomplish the present invention can be easily construed by a person skilled in the art. The computer-readable recording medium is any data storage device that can store data and which can be thereafter read by a computer system or computer code processing apparatus. Examples of the computer-readable recording medium include read-only memory (ROM), random-access memory (RAM), CD-ROMs, magnetic tapes, floppy disks, optical data storage devices, and a computer data signal embodied in a carrier wave comprising a compression source code segment comprising the code and an encryption source code segment comprising the code (such as data transmission through the Internet). The computer-readable recording medium can also be distributed over network-coupled computer systems so that the computer-readable code is stored and executed in a distributed fashion.

According to aspects of the present invention, when developing a recording and reading apparatus 600 supporting a new standard recording medium, a conventional resource can be utilized to the maximum by adding a data processor performing new data processing operations while using the conventional data processor as it is. Furthermore, the developing time and investment/labour costs of a new product, which supports the conventional and the next-generation optical disk standard, can be reduced, and also performance can be stabilized within a short time.

Although a few embodiments of the present invention have been shown and described, it would be appreciated by those skilled in the art that changes may be made in this embodiment without departing from the principles of the invention, the scope of which is defined in the claims.

## Claims

1. An apparatus to record and/or read data on/from a recording medium, comprising:
a first processor to process a first type of data arranged to be recorded and/or read on/from the recording medium;
a second processor to process a second type of data arranged to be recorded and/or read on/from the recording medium; and
a selection means arranged to select between a first signal output from the first processor and a second signal output from the second processor,
wherein the first processor is arranged to control the selection means to select between the first signal and the second signal.

2. The apparatus as claimed in claim 1, wherein the first processor is arranged to determine whether a data processing operation mode is set to a master mode in which the first processor processes the first type of data, or to a slave mode in which the second processor processes the second type of data.

3. The apparatus as claimed in claim 2, wherein the first processor is arranged to control the selection means to select the slave interface signal when in the slave mode.

4. The apparatus as claimed in claim 2, wherein the first processor is arranged to send a command to the second processor to process the second type of data.

5. The apparatus as claimed in claim 2 or 4, wherein the second processor is arranged to send a message notifying the first processor that the processing of the second type of data is complete.

6. The apparatus as claimed in any preceding claim, further comprising a third processor, arranged to be controlled by the first processor, and for outputting the first type of data processed by the first processor and the second type of data processed by the second processor.

7. The apparatus as claimed in any precedig claim, further comprising a fourth processor arranged to send an audio signal and/or a video signal to the first or second processors for recording on the recording medium.

8. The apparatus as claimed in claim 2, wherein:
the first processor is arranged to:
determine whether a master interface operation of reading or recording the first type of data from or on the recording medium must be performed when the determined operation mode is the master mode;
set a master flag when the it is determined that the master interface operation must be performed; and
clear the master flag when the master interface operation is complete.

9. The apparatus as claimed in claim 8, wherein:
the second processor is arranged to determine whether a slave interface operation of reading or recording the second type of data from or on the recording medium must be performed when the determined operation mode is the slave mode; and
the first processor is arranged to control the selection means to select the second signal when the determined operation mode is the slave mode, the slave interface operation must be performed, and the master flag has been cleared.

10. The apparatus as claimed in claim 8, wherein:
the second processor is arranged to:
determine whether a slave interface operation of reading or recording the second type of data from or on the recording medium must be performed when the determined operation mode is the slave mode;
set a slave flag when the second processor determines that the slave interface operation must be performed; and
clear the slave flag when the slave interface operation is complete.

11. The apparatus according to claim 10, wherein the first processor is arranged to control the selection means to select the first signal when the determined operation mode is the master mode, the master interface operation must be performed, and the slave flag has been cleared.

12. The apparatus as claimed in claim 8, wherein the first processor is arranged to control the selection means to select the second signal when the master flag has been cleared.

13. The apparatus as claimed in claim 2, wherein the second processor is arranged to determine whether a master interface operation of reading or recording the second type of data from or on the recording medium must be performed when the determined operation mode is the slave mode;
and wherein the second processor is arranged to set a slave flag when the slave data processor determines that the slave interface operation must be performed, and to clear the slave flag when the slave interface operation is complete.

14. The apparatus as claimed in claim 13, wherein the second processor is arranged to send a message, after clearing the slave flag, notifying the first processor of completion of the slave interface operation.

15. The apparatus as claimed in claim 13, wherein
the first processor is arranged to determine whether a master interface operation of reading or recording the first type of data from or on the recording medium must be performed when the determined operation mode is the master mode, and
to control the selection means to select the first signal when the determined operation mode is the master mode, the master interface operation must be performed, and the slave flag has been cleared.

16. The apparatus as claimed in claim 2, wherein the first processor is arranged to control the selection means to select the first signal when a slave interface operation of reading or recording the second type of data on the recording medium has not been completed and when the first processor determines that a master interface operation of reading or recording the first type of data from or on the recording medium must be performed.

17. A method of recording and/or reading data on/from a recording medium, the method comprising:
determining whether a data processing operation mode is set to a master mode in which a first processor processes a first type of data to be recorded and/or read on/from the recording medium, or a slave mode in which a second processor processes a second type of data to be recorded and/or read on/from the recording medium; and
processing the first type of data in the master mode or the second type of data in the slave mode according to the determined operation mode.

18. The method as claimed in claim 17, wherein
the processing of the first type of data in the master mode comprises selecting a first signal output from the first processor to communicate with a disk drive; and
the processing of the second type of data in the slave mode comprises selecting a second signal output from the second processor as an interface signal to communicate with a disk drive.

19. The method as claimed in claim 18, wherein the first processor controls the selecting of the first signal in the master mode and the first processor controls the selecting of the second signal in the slave mode.

20. The method as claimed in claim 17, wherein the processing of the second type of data in the slave mode comprises:
processing the second type of data after receiving a command to process the second type of data from the first processor.

21. The method as claimed in claim 17, wherein the processing of the second type of data in the slave mode comprises:
sending a message to the first processor notifying it that the processing of the second type of data is completed.

22. The method as claimed in claim 17, further comprising outputting the first type of data processed by the first processor and the second type of data processed by the second processor.

23. The method as claimed in claim 17, further comprising receiving an audio signal and/or a video signal to be recorded on the recording medium.

24. The method as claimed in claim 17, wherein the processing of the first type of data in the master mode comprises:
determining whether a master interface operation of reading or recording the first type of data from or on the recording medium must be performed when the determined operation mode is the master mode;
setting a master flag when the master interface operation must be performed; and
clearing the master flag when the master interface operation has been completed.

25. The method as claimed in claim 24, wherein the processing of the second type of data in the slave mode comprises:
determining whether a slave interface operation of reading or recording the second type of data from or on the recording medium must be performed when the determined operation mode is the slave mode;
confirming that the master flag has been cleared;
selecting a second signal output from the second processor as an interface signal to communicate with a disk drive when the determined operation mode is the slave mode, the slave interface operation must be performed, and the master flag has been cleared; and
performing the slave interface operation when the second signal is selected.

26. The method as claimed in claim 24, wherein the processing of the first type of data in the master mode further comprises:
determining whether a slave interface operation of reading or recording the second type of data from or on the recording medium must be performed when the determined operation mode is the slave mode;
setting a slave flag when the slave interface operation must be performed;
clearing the slave flag when the slave interface operation has been completed; and
selecting a first signal output by the first processor as an interface signal to communicate with a disk drive when the master interface operation must be performed and the slave flag has been cleared.

27. The method as claimed in claim 24, further comprising:
selecting a second signal output by the second processor as an interface signal to communicate with a disk drive when the master flag has been cleared.

28. The method as claimed in claim 17, wherein the processing of the second type of data in the slave mode comprises:
determining whether a slave interface operation of reading or recording the second type of data from or on the recording medium must be performed when the determined operation mode is the slave mode;
setting a slave flag when the slave interface operation must be performed; and
clearing the slave flag when the slave interface operation has been completed.

29. The method as claimed in claim 28, wherein the processing of the first type of data in the master mode comprises:
determining whether a master interface operation of reading or recording the first type of data from or on the recording medium must be performed when the determined operation mode is the master mode;
confirming that the slave flag has been cleared;
selecting a first signal output from the first processor as an interface signal to communicate with a disk drive when the determined operation mode is the master mode, the master interface operation must be performed, and the slave flag has been cleared; and
performing the master interface operation when the master interface signal is selected.

30. The method as claimed in claim 17, wherein the processing of the first type of data in the master mode comprises:
selecting a first signal output from the first processor as an interface signal to communicate with a disk drive when a slave interface operation of reading or recording the second type of data on the recording medium has not been completed and the first processor determines that a master interface operation of reading or recording the first type of data from or on the recording medium must be performed; and
performing the master interface operation.

31. A computer readable recording medium comprising computer code which, when run on a computer carries out the steps of any of claims 17 to 30
